# EUROPEAN PATENT SPECIFICATION

(11) **EP 4 138 723 B1**
(45) Date of publication and mention of the grant of the patent: **07.10.2026**
(21) Application number: 21791587.5
(22) Date of filing: 22.04.2021
(51) Int. Cl.: A61C 8/00

(54) **ABUTMENT FOR IMPLANT CONNECTOR**
ABUTMENT FÜR IMPLANTATVERBINDER
BUTÉE POUR RACCORD D'IMPLANT

(30) Priority: 22.04.2020 US 202063013564 P; 15.06.2020 US 202063039003 P
(43) Date of publication of application: 01.03.2023
(73) Proprietor: Khoury Dent Ltd., 2165311 Karmiel (IL)
(72) Inventor: KHOURY, Nikola, 2514700 Kfar Vradim (IL)
(74) Representative: Fry, David John
(86) International application number: PCT/IL2021/050465
(87) International publication number: WO 2021/214777

(56) References cited:
- EP-A1- 1 621 156
- WO-A1-2019/025321
- WO-A1-2019/214773
- KR-B1- 101 966 407
- US-A1- 2010 330 529
- US-A1- 2010 330 529
- US-A1- 2011 097 687
- US-A1- 2012 322 030
- US-A1- 2013 209 958
- US-A1- 2016 143 710
- US-A1- 2018 140 390
- US-A1- 2019 298 498
- US-B2- 9 522 051

## Description

### TECHNICAL FIELD

The present disclosure relates to the field of dental abutments in general, and to inclined dental abutments, in particular.

### BACKGROUND

Dental abutments are commonly connected to the dental implant by a screw inserted from the top of the abutment and emerging from its base for screwing. Such connection method determines a maximal angle which a screw inserted through the abutment may form with respect to the longitudinal axis of the abutment. In known plain abutments, the maximal angle (which may be referred to also as a threshold angle) is about 9 degrees. Larger angle may place in risk the integrity of the abutment walls due to insufficient width in portions thereof, resulting from the inclination of the screw channel to the walls.

Plain dental base abutments thus have an inclination of up to 10 degrees. Inclinations of more than 10 degrees, typically do not allow to prepare an appropriate screw channel in the abutment in line with the implant axis, as required for inserting a screw through the abutment for securing it to the implant.

US 9,522,051 B2 discloses a dental abutment, comprising: first and second units that are connectible together by a connective element, and an intermediation tool, wherein the first unit is removably connectible to an unclaimed in vivo dental implant by rotating the connective element, wherein the connective element is a screw, said first unit having a distal end and a proximal end, the distal end is remoter from an approach of a dentist relative to the proximal end, said proximal end comprises a supportive surface adapted to lie in contact with a contact surface located on a distal end of the second unit, wherein a longitudinal axis of the second unit is perpendicular to a plane tangential to the distal end of the second unit, wherein said longitudinal axis of the second unit forms a predetermined angle with respect to a longitudinal axis of the first unit, the predetermined angle determining an inclination of the second unit about the longitudinal axis, wherein a bore for the connective element within the first unit shares the longitudinal axis with the dental implant, and the intermediation tool is in alignment with the longitudinal axis of the second unit.

### BRIEF SUMMARY

One broad aspect of the disclosed subject matter is the provision of dental abutments inclined up to 30 degrees and yet need not have more than a single screw channel nor a conical adaptor, for securing the abutment to a dental implant by a screw.

Another broad aspect of the disclosed subject matter is the provision of tolerated connective complex for tethering a milled bar to a plurality (e.g. four) dental implants.

In the context of this specification the term 'distal end' refers to an end of a described part, which in vivo (i.e., in the mouth of a patient undergoing a dental procedure by a dentist), is remoter from the approach of the dentist relative to an opposite end of that part, and which may thus be referred to as the 'proximal end' of the part described.

The invention relates to a dental abutment defined in the appended claims.

A first exemplary embodiment of the disclosed subject matter is a dental abutment, comprising first and second units, the first unit is removably connectible to an unclaimed in vivo dental implant by any acceptable connective element pivotable with respect to both units, said first unit having a distal end contoured in match with an end contour of the dental implant, and a proximal end contoured in match with a distal end contour of the second unit, said proximal end comprises a supportive surface adapted to lie in contact with a contact surface located on the distal end of the second unit, wherein a longitudinal axis of the second unit is perpendicular to a plane tangential to the distal end of the second unit, wherein a longitudinal axis of the second unit forms a predetermined angle with respect to a longitudinal axis of the first unit such that an angle between the longitudinal axis of the second unit and a longitudinal axis of a dental implant of interest when the first and second units are connected together and to the dental implant of interest, is equal to the predetermined angle, wherein the first and second units are connectible together by connective means other than and unattached to the connective element.

The dental abutment may further comprise mutual rotation preventive preparation structure configured to allow a dentist to disable in vivo pivoting of the second unit with respect to the first.

In various embodiments of the presently disclosed subject matter, the mutual rotation preventive preparation structure comprises matching rotational symmetry breaking male-female contours (e.g. one or more pairs each pair comprises matching protrusion and indentation notches), wherein at least one rotational symmetry breaking male contour is formed in one of the first and the second units, wherein at least one rotational symmetry breaking female contour in match with the at least one rotational symmetry breaking male contour is formed in another of the first and the second units.

In various embodiments of the presently disclosed subject matter, the mutual rotation preventive preparation comprises outwardly facing wall surface extending from a mid-portion of the first unit towards the proximal end of the first unit and facing away from the longitudinal axis of the second unit once the second unit is connected to the first, wherein the second unit is contoured and dimensioned to unhide the outwardly facing wall surface, whereby allowing a dental prosthesis to be integrated in a first portion thereof with the outwardly facing wall surface and in a second portion thereof with an outwardly facing wall surface of the second unit.

In various embodiments of the presently disclosed subject matter, the supportive surface is on a plane tilted with respect to a longitudinal axis of the first unit, by a degree of tilting resulting in that the predetermined angle is between 11 and 30 degrees.

In various embodiments of the presently disclosed subject matter, the outer walls of the second unit are configured to extend without intersecting the longitudinal axis of the first unit and are free of through holes associated with screw channel.

In various embodiments of the presently disclosed subject matter, the second unit is permanently connectible to the first unit by welding, soldering, sticking, or gluing.

In various embodiments of the presently disclosed subject matter, the second unit comprises a through hollow extending between an opening at the proximal end of the second unit and between a proximal end of the connective element (or a continuum hollow formed in the proximal end of the first unit, in which the end of the connective element is located) , whereby providing a dentist with an access to a proximal end of the connective element for connecting or disconnecting between the dental abutment and a dental implant by manipulating the connective element.

In various embodiments of the presently disclosed subject matter, the connective element is a screw.

In various embodiments of the presently disclosed subject matter, the dental abutment further comprises an intermediation tool dimensioned to be concealed within the hollow, and having a distal end adapted to be geared to a teethed head portion of the screw, and a proximal end adapted to be driven by a matching screwdriver.

In various embodiments of the presently disclosed subject matter, the second unit has an outer wall surrounding a hollow, the hollow is opened to the proximal end and includes a surrounding indentation formed in the outer wall.

In various embodiments of the presently disclosed subject matter, the surrounding indentation may have a curved contour (e.g., with arched, bow like, semi-circular curvature) in a cross section taken through the longitudinal axis of the second unit.

Another exemplary embodiment of the disclosed subject matter is a dental set comprising at least one first unit according to said first exemplary embodiment, and further comprising a special first unit, the special first unit comprises a thread at a distal end of the special first unit and constituting a first thread, adapted to be screwed into a dental implant, and an outer wall surrounding a hollow, the hollow is opened to a proximal end of the special first unit and includes a surrounding indentation formed in the outer wall and adapted to retain a split ball of a tolerated connective complex.

In various embodiments of the presently disclosed subject matter, the surrounding indentation included in the special first unit may have a curved contour (e.g., with arched, bow like, semi-circular curvature) in a cross section taken through a longitudinal axis of the special first unit.

In various embodiments of the presently disclosed subject matter, the outer wall with the surrounding indentation is in a removably connectible unit having a second thread on a distal end thereof mating with a third thread located closer to a proximal end of the special first unit than the first thread.

### THE BRIEF DESCRIPTION OF THE SEVERAL VIEWS OF THE DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:
Figure 1 illustrates a side view of a dental abutment complex, according to a first exemplifying embodiment of the presently claimed subject matter.
Figure 1A illustrates an exploded side view showing the constituents included in the dental abutment complex of Figure 1, before assembled.
Figure 1B illustrates a vertical cross section view of the embodiment shown by Figure 1.
Figure 1C illustrates a side view of a dental abutment according to the presently disclosed subject matter, marked with dotted lines generalizing the relations between its internal spaces and between a longitudinal axis of its base (which coincides with a longitudinal axis of a dental implant which the abutment base is intended to be connected to).
Figure 1D illustrates a side view of a dental abutment complex, according to a variation of the first exemplifying embodiment of the presently disclosed subject matter.
Figure 1E illustrates a vertical cross section view of the embodiment shown by Figure 1D.
Figure 1F illustrates an exploded side view showing the constituents included in the dental abutment complex of Figure 1D, before assembled.
Figure 2 illustrates a side view of a dental abutment complex, according to a second exemplifying embodiment that does not form part of the claimed subject matter.
Figure 2A illustrates an exploded side view showing the constituents included in a dental abutment complex similar to that of Figure 2 in its assembling concept (yet differing from that of Figure 2 in contours and proportions), before assembled.
Figure 2B illustrates a vertical cross section view of an assembled dental complex according to the embodiment shown by Figure 2B.
Figure 3 illustrates an exploded side view of a dental abutment, according to a third exemplifying embodiment that does not form part of the claimed subject matter.
Figure 3A illustrates a vertical cross section view of an assembled dental complex according to the embodiment shown by Figure 3.
Figure 3B illustrates a perspective view of a sleeve unit (focusing on the distal end of the sleeve) with an interconnecting unit inside, according to the third exemplifying embodiment of the presently disclosed subject matter.
Figure 3C illustrates a distal end view of the sleeve unit of Figure 3B.
Figure 4 illustrate an exploded perspective view of two abutments according to a fifth exemplifying embodiment that does not form part of the claimed subject matter, a dental bar (referred to also milled bar) which the two abutments intend to retain, and the dental implants to which the abutments are to be connected.
Figure 4A illustrates a perspective view showing cross section view through a dental bar prepared to be retained by an abutment according to a fifth exemplifying embodiment of the presently disclosed subject matter, showing the bar and a tolerated connective complex in position on a bar's flanged aperture.
Figure 4B is a vertical cross section of the tolerated connective complex shown by Figure 4A, without the dental bar.
Figure 4C is a side view of the complex illustrated in the cross section view of Figure 4B.
Figure 4D is a vertical cross section of the tolerated connective complex shown by Figure 4A, with a dental bar tethered by, and with a special second unit by which the complex is secured to a base unit.
Figure 4E is a side view of the special second unit of Figure 4D.
Figure 4F is a cross section view about the plane Y-Y of Figure 4E.
Figure 4G is a side view of a base unit according to an embodiment of the presently disclosed subject matter.
Figure 4H is a cross section view about the plane K-K of Figure 4G.
Figure 5 is a side view of a special first unit according to an embodiment that does not form part of the claimed subject matter.
Figure 5A is a cross section view about the plane L-L of Figure 5.
Figure 6 is cross section view of a hybrid first unit and a special second unit according to an embodiment that does not form part of the claimed subject matter.
Figure 6A is a side view of the embodiment illustrated by Figure 6, illustrating about the planes J-J and Z-Z about which the cross section of the units of Figure 6 were taken.

### DETAILED DESCRIPTION

One technical problem dealt with by the disclosed subject matter is to provide a dental abutment that enables inclination of more than 10 degrees. While dental abutments in the market may have an inclination of more than 10 degrees, such more than 10 degrees abutment have disadvantages resulting from the difficulty of treating the screw which connects the abutment to the intended implant, through the angulation. There are required in practice dental abutments of more than 10 degrees angularity, in order to allow a better alignment of the abutments with other teeth or portions within the subject's mouth, and which yet allow a dentist to insert the screw into the abutment and to manipulate it, without or with minimized loss of features as compared to a straight abutment. Inclinations of more than 10 degrees, may not allow to prepare an appropriate screw channel in the abutment in line with the implant axis, as in straight abutments, as required for inserting a screw through the abutment for securing it to the implant.

In some exemplary embodiments, plain base abutments may comprise two screw channels, requiring a conical adapter between their two parts. Working with such abutments is complicated and provides non-aesthetic results. Accordingly, an inclination of at least between 11 to 30 degrees may be required, with a single screwing channel and without a conical adaptor.

One technical solution is to utilize a base abutment connected directly to the implant (herein after referred to as Uni-Base abutment). The Uni-Base abutment allows screwing and tightening the screw, while connecting to the implant directly from the upper single non-straight channel thereof. As a result, the main screw may not move from the top of the sleeve.

In some exemplary embodiments, the upper single non-straight channel may be a single screwing channel utilizing a single screw to be inserted in a single screwing passage within the abutment. The abutment may be connected to the implant by a screw that is inserted from the top of the abutment until its base for screwing. Therefore, there may be a threshold angle, of the abutment, that allow the screw to pass through. The threshold angle of the such abutments may be about 9 degrees. Uni-Base abutment may provide for a screwing method that enable inclined abutments up to 30 degrees.

In some exemplary embodiments, Uni-Base abutment may be made with a single screwing channel, without the conic adaptor and it's ready for crown cementation that is manufactured by milling by lab technologies after CAD/CAM scanning. In some exemplary embodiments, the Uni-Base abutment may be used for inclined implants with an angle between 11 to 30 degrees. The Uni-Base abutment according to the claimed subject-matter is comprised of an angled base with only one screwing channel (a hole through which a titanium screw can pass vertically), a screw that has a toothed-domed head, a sleeve that covers the screw's head and connected by adjacent nearly planar surfaces, one on the sleeve against one on the base (i.e. without cone surfaces as conventional two part abutments suggest) - in a non-disassembled way in a direct rotational screwing of the sleeve itself - to the inclined surface of the angled base. The sleeve has on its top a screwing hole through which a screwdriver capable diagonally only to screw the titanium screw using his toothed-domed head. The non-disassembled connection can be done by soldering, sticking or other connection.

The sleeve has a hole through which a screwdriver - or any other suitable tool - capable diagonally only to screw the screw using his toothed-domed head. The sleeve is connected to the inclined surface, of the angled base, in non-disassembled connection that can be done by soldering, sticking or other connection.

In some exemplary embodiments, as the angled base and the sleeve base are connected in a non-disassembled way by of the direct rotating of both parts themselves, the Uni-Base abutment may have only one screwing channel. Moreover, the sleeve base can have a slip or a notch that can be inserted into a grove in the angled base to stabile the connection and avoid direct rotation. While using the universe, it assembled in one unit. Additionally or alternatively, a crown may be built on the sleeve, and the whole unit is screwed by using the screwdriver (or other suitable tool) via the upper opening of the sleeve, to tighten the Uni-Base abutment directly to the implant itself.

Another technical solution is a Clicq-Base abutment for dental implants that can be used either inclined or vertical. The Clicq-Base may be comprised of an angled base, which can be horizontal, a screw to tighten the angled base (meanwhile the crown can be built on the Sleeve) and a cylinder with screw thread on each end, one is right hand thread and the other is left hand thread. The upper side of the cylinder may be a hole shaped in a way that enables to use a tool to rotate it, such as a hexagon, or the like. The base and the sleeve may have screw threads inside in relation to the cylinder threads. The sleeve can have a slip that can be inserted into a grove in the angled base to stabile the connection.

In some exemplary embodiments, the sleeve with the crown can be connected to the angled (or horizontal) base, using the cylinder in between and rotated by a suitable tool and due to the two kinds of threads the sleeve is tightened to the base.

In some exemplary embodiments, the sleeve and the base are connected by mating threads, and the crown is connected partly to an externally facing surface of the sleeve and partly on an external surface of the base, which is disposed facing away from a longitudinal axis common to the sleeve and to a proximal wall of the base, whereby in vivo pivoting of the sleeve with respect to the base is prevented since the crown is connected to both the sleeve and the base.

### DETAILED DESCRIPTION OF THE FIGURES

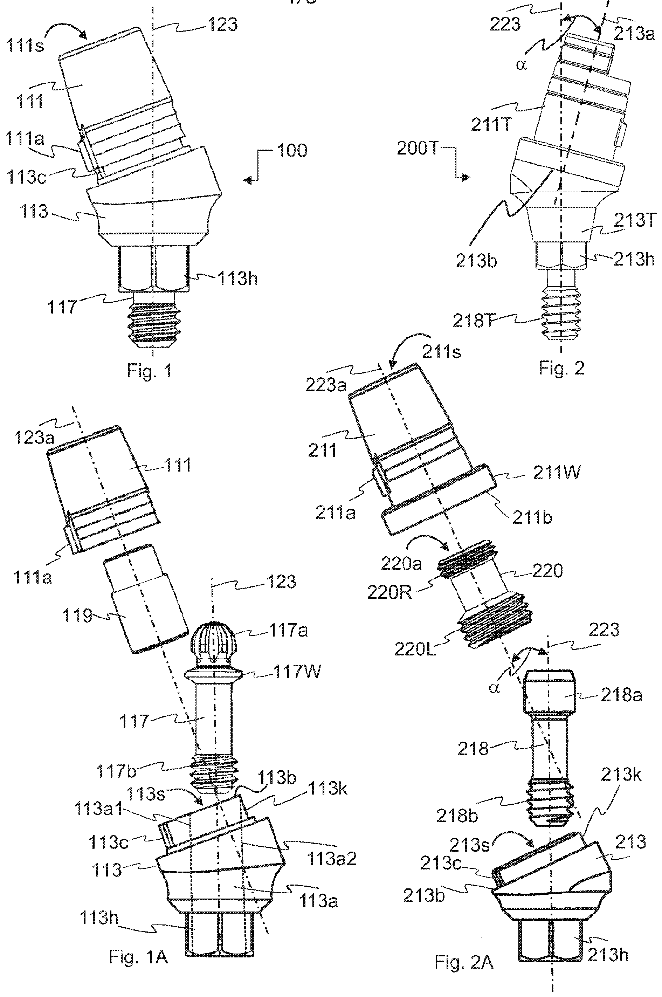

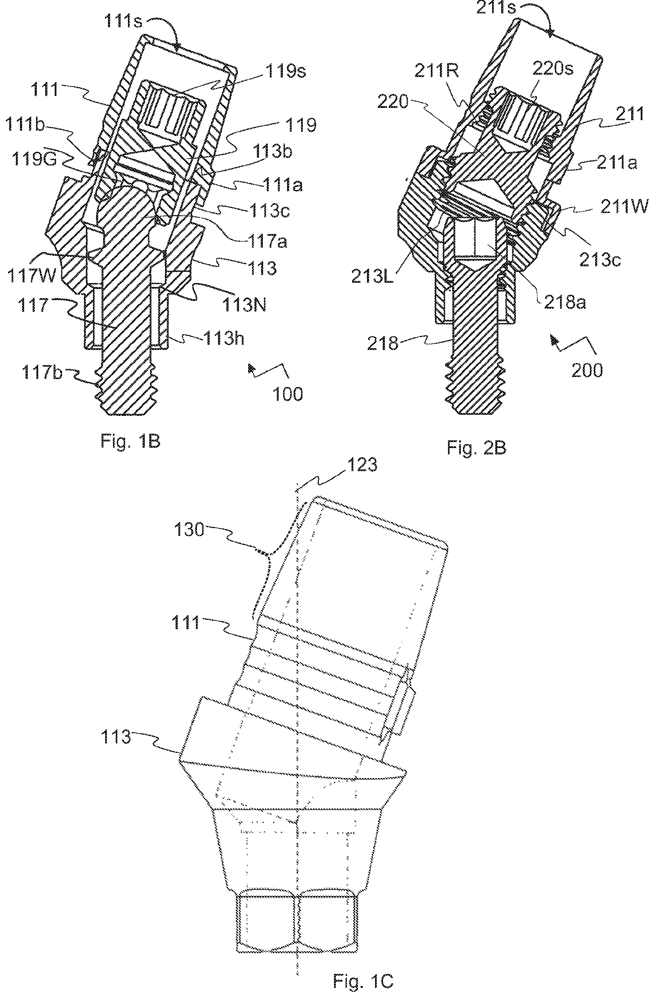

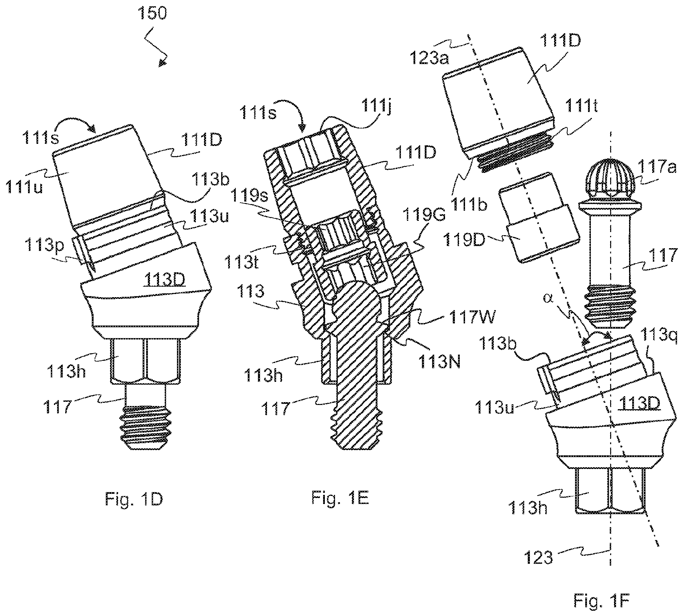

Figure 1 illustrates a side view of a dental abutment 100, according to the claimed subject matter. The abutment, comprising first and second units, 113 and 111, respectively, is illustrated in this figure as an assembled ready to use abutment complex. Figure 1A illustrates an exploded side view showing the constituents included in the dental abutment complex of Figure 1, before assembled. The cross section view in Figure 1B facilitates understanding the interrelations between the constituents of the complex.

In the embodiment exemplified in these three figures, the second unit, 111, (referred to also herein 'sleeve') is adapted to be connected to the first unit 113 (referred to also herein 'base') permanently, i.e., by a non-separable connective method, e.g., welding, soldering, gluing, or sticking (either of which may be destructive to the abutment constituents, in case separated forcefully). Mutual protrusion and groove notches created respectively on the first and the second units, facilitate alignment of the first and the second units and stabilize the abutment during their welding (or gluing) process, and may contribute also to future stability of the abutment complex by resisting relative rotation between the two units.

The notch (either protrusion or indentation) within the sleeve 111 is hidden from the dentist when integrating the two unis together, since it is located on the inside of the sleeve. For ease of identification, the location of the notch (either protrusion or indentation) within the sleeve 111, can be hinted by a mark, such as bulge 111a, formed on the outer surface of the sleeve. The mutual notch 113c, on the base 113, is visible to the dentist, thus may not require a hint for identifying its location.

Once assembled onto an in vivo dental implant, a crown can be built on the sleeve 111.

The complex constituting the dental abutment 100, can be either connected to or removed from the implant by rotating the screw 117 in the relevant direction (clockwise or counterclockwise, for advancing or receding the thread helix 117b into or out from the implant). The access to the screw for rotating it, is via the upper opening 111s of the sleeve 111. This may be accomplished even after the first and second units became permanently assembled, with the assistance of an intermediation tool 119 (seen in Figures 1A and 1B). The intermediation tool 119, may have a conventionally contoured proximal end (e.g., hexagonal recess 119s) to be manipulated by a conventional screwdriver in common use by dentists. The distal end of the intermediation tool 119 is configured for being mutually geared with a head 117a of the screw 117, whereby rotation of the screwdriver about a longitudinal axis 123a of the sleeve 111, is transmitted by the gearing between intermediation tool 119 and the head 117a of the screw 117, into rotation of the screw 117 about the longitudinal axis 123, which is common to the base and to the implant. In the illustrated embodiment the head 117a of the screw 117 is rounded and designed to be partially wrapped by the distal end 119G of intermediation tool 119, thus may be too small in diameter to secure the base 113 to an intended dental implant. The screw 117 may therefor comprise a peripheral widening 117W, resembling the bottom end of a conventional screw head (such as head 218a of screw 218). The peripheral widening 117W is intended to lean on the inward narrowing 113N (formed at the proximal end of anti-rotation hexagonal member 113h) in the base unit 113.

Before the second unit 111 is permanently connected to the first unit, a dentist making use of the abutment 100, benefits from direct access to the screw. The screw head 117a is exposed at the opening 113s of the base 113, and the screw can thus be easily controlled by a matching screwdriver. Meanwhile, in embodiments in which the sleeve 111 is to be attached to the base 113 by gluing and/or by sticking, a dental crown may be prepared and built onto the second unit.

Regardless of whether the dentist opts to integrate the second unit with the first only after the dental crown is already built on the second unit, the indirect access to the screw, through the opening 111s of the sleeve and with the assistance of the intermediation tool 119, allows the dentist to connect and disconnect the abutment to and from the dental implant, whenever required.

The abutment complex 100 comprises a single screw channel, 113a, being a screw bore extending through the first unit 113, to be sharing with an intended implant the same longitudinal axis 123, and located in the region between the dashed lines 113a1 and 113a2 in Figure 1A. As can be appreciated, once integrated with the first unit 113, the second unit 111 prevents removal of the screw 117 from the abutment complex 100, due to the angular orientation of the second unit 111 with respect to the first unit 113. Due to said angular orientation, the sleeve-like wall of the second unit, extends (in the wall region 130, which is intersected by the axis 123, see Figure 1C) across the screw channel thus blocking the way of the screw out of the abutment. The dentist yet can manipulate the screw 117 through the intermediation tool 119, which may be concealed within the sleeve 111.

Conventional one-piece angular abutments, allow a dentist to manipulate the screw by having their screw channel extending linearly through the angled portion to which the dental prosthesis is to be attached. In conventional angular abutments, this angled portion is therefore produced sufficiently massive to accommodate a diagonally disposed screw hole. In contrast to that, the second unit 111 may lack a diagonally disposed screw hole and may thus be formed as a tubular hollow sleeve having thinner wall and more compact construction than that of said conventional one-piece angular abutments. A more compact construction of the prosthesis support member, as may be provided according to the presently disclosed subject matter, may provide a dentist with more freedom in designing the prosthesis and may eliminate extensive grinding work which may be required in conventional abutments for making room for the intended prosthesis.

Referring now specifically to Figure 1A, the constituents of the dental complex embodiment 100 of Figure 1, are illustrated separately, yet oriented about two angularly spaced axes 123 and 123a, with an angle α in between. The axis 123 is overlapping with the longitudinal axis of a dental implant to which the complex is intended to be connected to in vivo. The axis 123a is the longitudinal axis of the sleeve unit 111. In manufactured embodiments, the angle α may be between 0 and about 30 degrees, e.g., 0 degrees, 10 degrees, 11 degrees, 15 degrees, 20 degrees, 25 degrees and the like, depending on market demands. The same sleeve unit 111 may be used regardless of the angle α, which may be determined according to the design of the base unit 113 only, without affecting the design of the sleeve unit 111. The angle between the supportive surface 113b and the axis 123, determines the inclination of the sleeve unit 111 about axis 123, because the contact surface 111b of the sleeve 111 which is designed to seat on the supportive surface 113b, is contoured to be tangential to a plane perpendicular to the axis 123a. Consequently, the inclination of surface 113b to the axis 123, determines the inclination of axis 123a to axis 123, expressed by the angle α.

As can be appreciated from the figure, the sleeve 111 and the tool 119, are in alignment with the axis 123a, while the base unit 113 and the screw 117, are in alignment with the axis 123, in reflection to their orientation in the assembled complex 100, and as also shown in the cross section view of Figure 1B.

The screw 117 has a domed head 117a, grooved to form a plurality of teeth (e.g., 6 teeth) angularly spaced about the axis 123, and rounded according to the round contour of a dome top constituting the domed head 117a. The teeth are contoured and dimensioned to be geared with a teethed distal end 119G of the intermediation tool 119.

The base unit 113, comprises a collar 113k for facilitating the assembling of the sleeve 111 with the base 113. A notch 113c may be formed on a desired location on the collar 113k, in match with an indentation formed inside the sleeve 111, for facilitating positioning and for preventing the sleeve unit from pivoting with respect to the base once assembled. The location of the notch within the collar may be hinted by a protrusion 111a formed on the outer surface of the sleeve, in alignment with the location of the notch.

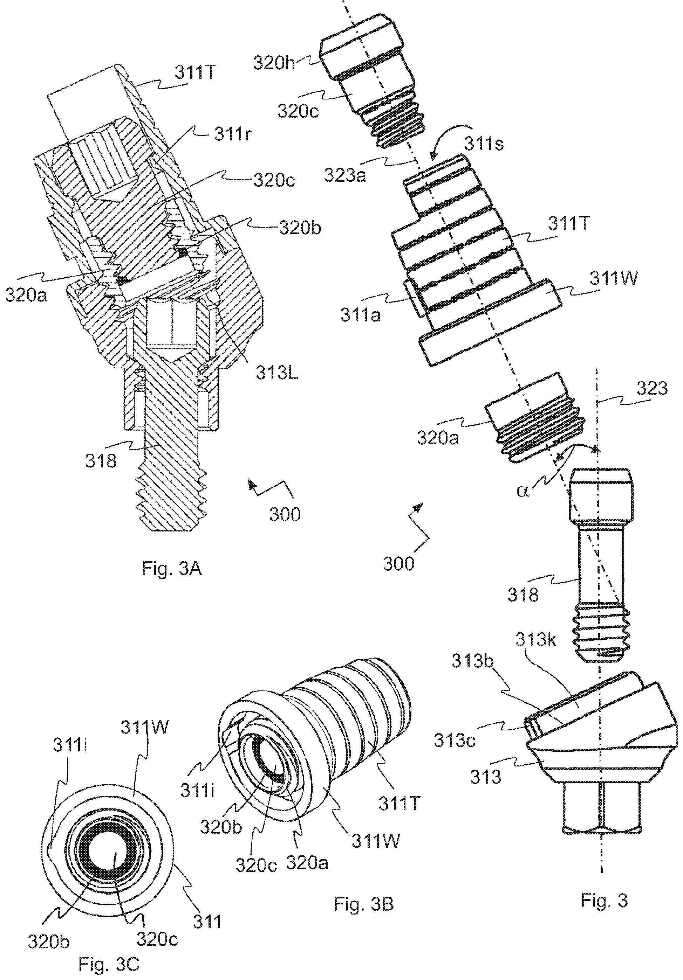

Figure 1D illustrates a side view of a dental abutment complex 150, according to a variation of said first exemplifying embodiment of the presently disclosed subject matter. The distal portion of the base unit 113D the screw 117, and intermediation tool 119D, are like the distal portion 113 of the base unit, the screw and the intermediation tool of the embodiment of Figure 1 (in variation embodiment 150, the intermediation tool 119D is more compact in length than 119 in embodiment 100, and has smaller diameter in its proximal portion, in comparison to a larger diameter in its distal portion. Consequently, the edge of the thread member 111t, may be utilized for restricting linear dispositioning of the intermediation tool 119D further into the hollow of the sleeve). The embodiment of Figure 1 and its variation in Figure 1D, differ, however, in the connection method between the first unit and the second unit. This may reflect also on the rotation preventive preparation structure, which is a structural arrangement in the abutment assembly, by which the second unit may be secured from pivoting about its longitudinal axis when in vivo forces may exert pivot causing stresses on the abutment, through the prosthesis constructed on and supported by the abutment. While in the embodiment 100, the rotation preventive preparation structure may include matching rotational symmetry breaking male-female contours, such as notch 113c and a mutual indentation (like 311i in Figure 3B), and/or a welding by which the first and second units unite, in the embodiment 150 of Figure 1D, the rotation preventive preparation structure includes the outwardly facing surface 113u of the base unit 113D, and the outwardly facing surface of the sleeve unit 111u. In various embodiments, the rotation preventive preparation structure includes also the bulge 113p which protrudes from the outwardly facing surface 113u.

The outwardly facing surface 113u of the base unit 113D, is an outer surface of a wall which elevates from surface 113q, as an extended collar. The outwardly facing surface of the sleeve unit 111u is the outer surface of the wall of sleeve 111D.

Referring now to Figures 1D to 1F, it can be appreciated that in the illustrated variation, the connection between the base unit 113D and the sleeve unit 111D, is by mating threads 111t (an outer thread on a cylindrical connective member of the sleeve emerging from the distal end of the sleeve 111D) and 113t, which is formed as an inner thread inside the proximal opening 113s of the extended base unit 113D. The sleeve unit 111D may be provided with a special contour such as a hexagonal contour 111j in match with a screwdriver, for facilitating the assembling of the second unit with the first by said threads, as well as for facilitating separation of the two units when needed.

Once the base unit 113D and the sleeve unit 111D are assembled together and to an intended dental implant, the surfaces 113u and 111u, may constitute together an infrastructural support for the construction of a tooth prosthesis. The prosthesis can be attached to the surfaces 113u and 111u by satisfactorily firmly adhesion, whereby pivoting the sleeve unit with respect to the base unit under in vivo forces exerted on the prosthesis, is prevented. The protrusion 113P (which differently from other embodiments of the presently disclosed subject matter, protrudes from a wall of the base unit 113D, rather than from an outer surface of the sleeve) is intended to protrude into the prosthesis as an anchor, thus reducing furthermore risk of relative pivoting between base unit 113D and the sleeve unit 111D.

Since the surfaces 113u and 111u, may constitute together an infrastructural support for the construction of a tooth prosthesis which corresponds to the infrastructural support which the sleeve 111 alone provides in the embodiment 100, the embodiment 100 and its variation 150, may differ in proportions. This is because for same size abutments, the sleeve 111D may be shorter than the sleeve 111, as a function of the height of wall surface 113u from above the surface 113q of the base unit 113D. As an unbinding example, the ratio 'sleeve height' (from contact surface 111b to opening 111s) to 'base unit extended collar height' (from surface 113q up to supportive surface 113b), may be about 3:2 (i.e., 1.5).

Consequently, the proportions between a total height of the sleeve unit and a total height of the base unit may differ between the embodiment 100 and its variation 150, per same total height of the abutment assemblies 100 and 150.

For reasonable anti-rotation results, said ratio may vary between 0.3 -3.

Referring now to Figures 2 and 2A, two dental abutment complexes 200T and 200, according to a second exemplifying embodiment that do not form part of the claimed subject matter are disclosed, respectively. Said two dental abutment complexes differ one from another in contours and proportions as reflected from the Figures, yet both share the same assembling concept. The main differences are in that the sleeve unit 211T is of a type partly truncated at its proximal portion (see right top of Figure 2), and that the base unit 213T has an extended cone contoured portion from above the anti-rotation hexagon 213h in comparison to the sleeve unit 211 of Figure 2A. In the remaining of the description, references made to 211 apply also to 211T, and references made to 213 apply also to 213T. The screw 218T of the abutment complex 200T differs in proportions from screw 218 of abutment complex 200. In the remaining of the description, references made to 218 apply also to 218T, and vice versa.

The embodiment represented by the two types 200T and 200, differs from the embodiment of Figure 1, in having the sleeve 211 removably connectible to the base unit 213, by means of an interconnecting unit 220 (referred to also 'cylinder screw'). The interconnecting unit comprises threads on its opposite ends. A first outer thread 220R is on the proximal end of the interconnecting unit 220, and is mating with an inner thread 211R (shown in the cross section view of Figure 2B) formed within the sleeve unit 211, e.g. in the distal half thereof. A second outer thread 220L is on the distal end of the interconnecting unit 220, and is mating with an inner thread 213L (shown in the cross section view of Figure 2B) formed within the base unit 213, in the proximal half thereof.

In various embodiments of the presently disclosed subject matter one of the threads 220R and 220L, e.g., 220R is a right-hand thread, and other, 220L is a left-hand thread. Due to the two kinds of threads, the sleeve 211 can be tightened to the base 213 by rotating the interconnecting unit 220 via the upper opening 211s of the sleeve 211.

Referring now specifically to Figure 2A, the constituents of the dental complex embodiment 200, are illustrated separately, yet oriented about two angularly spaced axes 223 and 223a, with an angle α in between. The axis 223 is overlapping with the longitudinal axis of a dental implant to which the complex is intended to be connected to in vivo. The axis 223a is the longitudinal axis of the sleeve unit 211. In manufactured embodiments, the angle α may be between 0 and about 30 degrees, e.g., 0 degrees, 10 degrees, 11 degrees, 15 degrees, 20 degrees, 25 degrees and the like, depending on market demands. The same sleeve unit 211 may be used regardless of the angle α, which may be determined according to the design of the base unit 213 only, without affecting the design of the sleeve unit 211. The angle between the supportive surface 213b and the axis 223, determines the inclination of the sleeve unit 211 about axis 223, because the distal edge 211b of the sleeve 211 which constitutes a contact surface designed to seat on the supportive surface 213b, is contoured to be tangential to a plane perpendicular to the axis 223a. Consequently, the inclination of supportive surface 213b to the axis 223, determines the inclination of axis 223a to axis 223, expressed by the angle α.

The base unit 213, comprises a collar 213k, and the sleeve-like design of the sleeve unit 211, comprises a widening 211W formed on the distal end of the sleeve unit. Once the base and the sleeve units are fully assembled together, the sleeve widening 211W covers the collar 213k. A notch 213c may be formed on a desired location on the collar 213k, in match with an indentation formed inside the widening 211W, for facilitating positioning and for preventing the sleeve unit from pivoting with respect to the base once assembled. The location of the notch within the collar may be hinted by a protrusion 211a formed on the outer surface of the sleeve, in alignment with the location of the notch.

The interconnecting unit 220 comprises at its proximal end 220a a hexagonal indentation (see 220s on Figure 2B) like a conventional screw, or may have any other desired screw head, to facilitate its rotation by a matching screwdriver. The sleeve 211 comprises an opening 211s at it proximal end, through which a conventional screwdriver may be inserted for manipulating the interconnecting unit 220.

As can be appreciated, the embodiments 200T and 200 allow removal and replacement of the sleeve 211 whenever required, without disconnecting the base unit 213 from the implant, hence without exposing the implant and its surroundings to the risk of contamination. This feature allows a dentist to connect the base unit to the implant (by advancing the thread helix 218b into the implant) by a screwdriver with direct access to the head 218a of the screw 218, through the opening 213s at the proximal end of the base unit, in the absence of the sleeve unit 211. The sleeve unit can then by temporarily secured to the base unit using the interconnecting unit 220, for taking required measurements and/or photos, then removed.

A healing cap having an outer thread mating with the inner thread 213L may then be secured to the base unit for a healing period. Meanwhile, the sleeve unit 211 may separately be subjected to crown building process. Once healed, the dentist can replace the healing cap by the sleeve unit with the already prepared crown, without manipulating the base unit, hence without exposing the implant and its surroundings to the risk of contamination.

Restoration of the crown and/or the prosthesis becomes a reasonable option whenever needed, with the embodiments 200T and 200, since there is no need to intervene with the cone-based connection between the abutment and the dental implant, as the base unit 213 need not be separated from the implant. This transfers the restoration treatment from the bone level to the tissue level, significantly increasing the likelihood of successful restoration procedure.

Referring now to Figure 3, a third exemplifying embodiment 300 that does not form part of the claimed subject matter is illustrated in an exploded side view. Like in the embodiments 200T and 200, the sleeve unit 311T is removably connectible to the base unit 313. Yet, while in the embodiments 200T and 200 the sleeve has an internal thread 211R mating with the external thread 220R on the proximal end of the interconnecting unit 220, in the embodiment 300, the sleeve unit 311T is removably connectible to the interconnecting unit 320a (referred to also as 'cylinder screw') by means of conventional screw 320c. The screw 320c may be inserted through the proximal opening 311s of the sleeve unit 311T and is to be manipulated through same opening by a matching screwdriver. The conventional outer thread of the screw is mating with internal thread formed within the interconnecting unit 320a, as appreciable from the cross section view in Figure 3A.

In various embodiments of the interconnecting unit 320a, the screw 320c is welded to the interconnecting unit 320a, at the location 320b (at the peripheral region of the distal end of the screw 320c). For the welding, the screw 320c is first inserted through the opening 311s of the sleeve 311T. The interconnecting unit 320a is then inserted through the opposite (distal) end of the sleeve 311T, and the screw is driven into the internal thread of the interconnecting unit, until its distal end starts emerging out of the internal thread of the interconnecting unit 320a, thus reaching the location of welding 320b. The screw and the interconnecting unit are then welded at the peripheral region 320b of the distal end of the screw. Once welded, the assembly comprising the screw 320c and the interconnecting unit 320a is trapped to the sleeve unit 311T (yet can freely rotate) due to an inward peripheral rim 311r formed inside the sleeve unit and having an internal diameter smaller than the lateral widths of both the screw head 320h and of the interconnecting unit 320a.

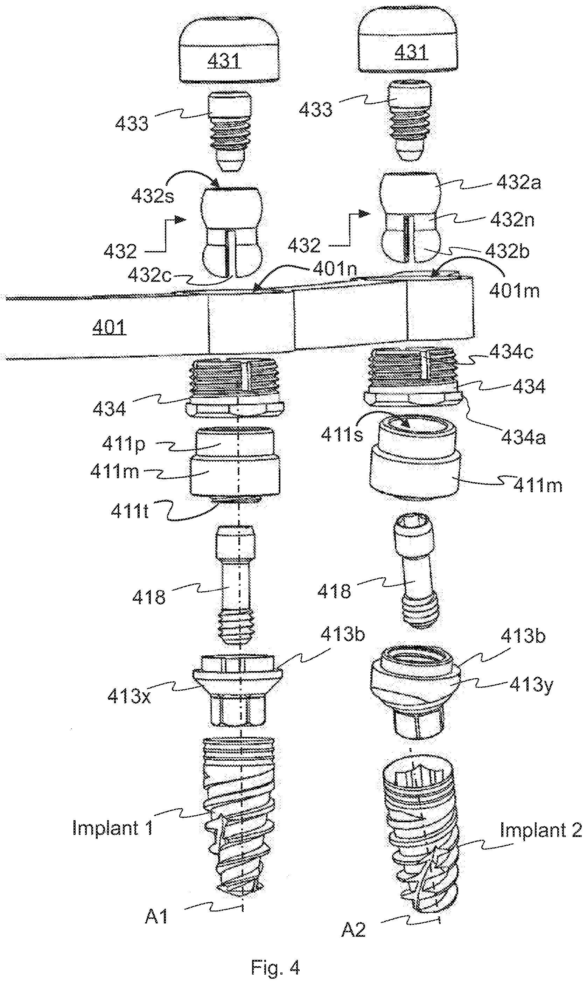

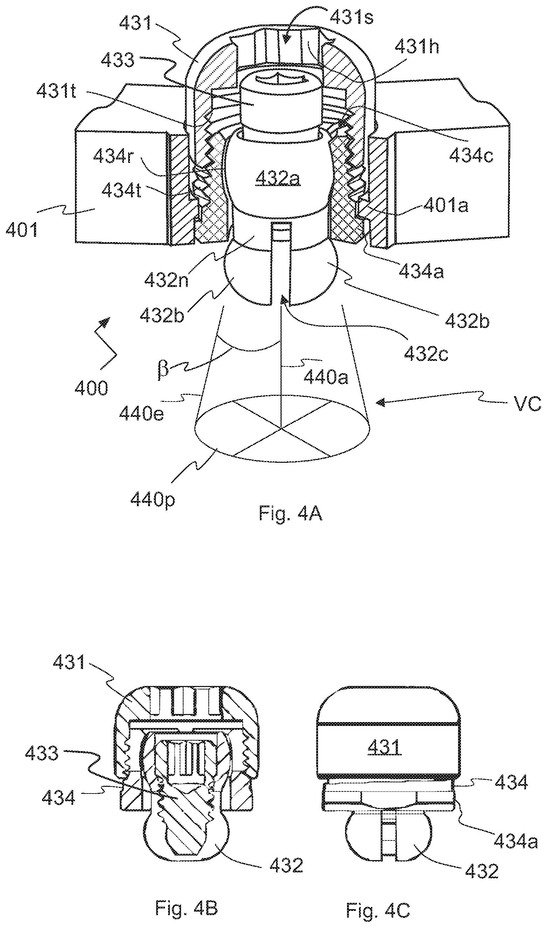

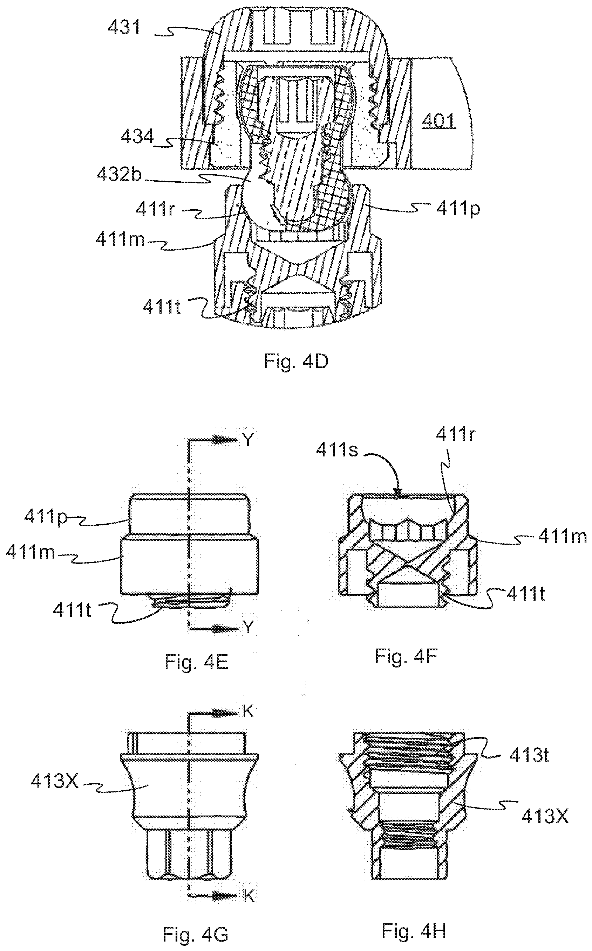

Inside the sleeve 311T there is ring-like shoulder (referred to also as an "undercut step") 311r for supporting the screw 320c when rotated by a screwdriver for driving the outer thread of the interconnecting unit 320a (which is welded to the screw, thus co-rotating with the screw) into its mating thread 313L inside the proximal half of the base unit. Upon tightening the screw, the sleeve unit 311T becomes tightened to the base unit 313. It can then be disconnected from the base unit whenever desired, by driving the screw in the opposite direction. Like the embodiment of Figure 2, the base may have a collar 313k with a notch 313c, and the sleeve 311T may have a widening 311W with internal matching notch 311i, the widening 311W adapted to wrap the collar 313k. The supportive surface 313b from which the collar 313k is elevating, may be inclined to the longitudinal axis 323, whereby the angle α is created between the axis 323a of the sleeve 311T and the axis of the base 313. Referring now to Figures 4 - 4H, an embodiment for retaining a milled bar 401 to a plurality of dental implants, e.g. Implant 1 and Implant 2, is illustrated. This embodiment does not form part of the claimed subject-matter. The milled bar may be produced e.g., by CadCam milling in a dental lab, after scanning the base units in vivo by a scan abutment. Two or more fixed holes are typically milled, e.g. four holes. The bar may then be connected by hand to a tolerated connective complex utilizing the bar holes. As explained hereinafter, the tolerated connective complex uses screwing and/or click technique with ball friction joints, which enable connection and adjusting of the bar while compensating against any inaccuracy in bar hole positions.

The milled bar 401 has through holes such as 401n and 401m in a plurality of locations. Inside each hole there is an inner rim 401a. A threaded cap 431, is to be inserted into each hole from a proximal end of the bar. The cap thread is an inner thread 431t, mating with an outer thread formed on a split nut 434 (split by two or more lateral through cuts 434c), to be inserted from a distal end of the bar. Each split nut 434 has an inner peripheral indentation 434r contoured and dimensioned to capture a ball head 432a of a tolerated connective unit 432. The tolerated connective unit comprises said ball head at a proximal end of the tolerated connective unit, and is further comprising a split ball head 432b (split by the lateral through cut 432c) at a distal end of the tolerated connective unit, and a narrowing body member 432n connecting between the ball head 432a and the split ball head 432b. The tolerated connective unit 432 further comprises a screw channel extending through the ball head, the narrowing body member and the split ball head, with an inner thread extending at least through a portion of said screw channel. The screw channel and a screw 433, are mutually dimensioned and contoured to cause the split ball head 432b to expand laterally with an amount of expansion depending on the linear position of the screw 433 inside the screw channel, such that when the screw is fully screwed, the split ball head is fully pressed by the screw from inside, thus fully expanded. When there is no stress from the screw (screw is released) the split ball head 432b returns to its unstressed, normally contracted, position due to the spring-like characteristics of the metal from which it is made.

The screw 433 may be inserted into the screw channel of the tolerated connective unit, through an opening 431s formed in the proximal end of the threaded cap 431. Through same opening 431s, the screw can be driven by a matching screwdriver. Rotation of the threaded cup may be facilitated by having is opening 431s with a polygonal contour 431h, e.g., a hexagonal opening in match with a conventional hexagonal screwdriver.

The opening 431s, may have a hexagonal contour (or any other desired contour) in match with a second screwdriver, whereby the threaded cap itself may be rotated for securing it with the split nut 434. The inner thread of the threaded cap and the outer thread of the split nut 434 are contoured and dimensioned for contracting the split nut by forcing its splits inwardly, with an amount of contraction reaching a maximum when the threaded cap and the split nut are fully screwed together. When there is no stress from the screw (screw is released) the split ball head 432b returns to its unstressed, normally contracted, position due to the spring-like characteristics of the metal from which it is made.

When there is no stress from the threaded cap 431 (threaded cap is released), the split nut 434 returns to its unstressed, normally expanded, position due to the spring-like characteristics of the metal from which it is made.

The amount contraction of the split nut 434 upon closing the threaded cap 431 on it, is adapted for narrowing the inner peripheral indentation 434r in such amount such that once the threaded cap is fully screwed to the split nut 434, wall portions of the peripheral indentation are forcefully pressing on the ball head, such that the ball head 432a is firmly and immovably seized within the recess by friction caused from said forcefully pressing.

The narrowing 432n, in the body of the tolerated connective member, allow a predetermined degree of freedom in the orientation in which the tolerated connective member 432 is immovably seized once the threaded cap 431 is fully secured to the split nut 434. Said degree of freedom is exemplified in Figure 4A by the virtual-cone VC having cone base 440p on a selected predetermined plane. The virtual-cone is delineated by a longitudinal axis 440a of the tolerated connective unit 432, passing through the predetermined plane when the tolerated connective member takes its extreme allowed inclination with respect to a middle location, in any direction such inclination is allowed. The degree of inclination is represented by the angle β between the longitudinal axis 440a when in the middle, and the axis 440e (which is another title for the axis 440a) when the unit 432 is tilted to an extremely allowed orientation. In various embodiments of the disclosed subject matter, the angle b may be 5 degrees, with a precision of between 5 - 10 percent.

Referring now to the tethering of the tolerated connective unit 432 to the base unit according to the presently disclosed subject matter, two different base units are depicted in Figure 4. A first base unit 413x has its surface 413b perpendicular to the longitudinal axis of an in vivo Implant 1, which is substantially in alignment with hole 401n in the milled bar 401. A second base unit 413y, has its surface 413b inclined to the longitudinal axis of an in vivo Implant 2, by an angle other than 90 degrees, for compensating against a certain deviation of the longitudinal axis of Implant 2, from alignment with hole 401m in the milled bar 401.

The two base units 413x and 413y are to be connected to the implants, respectively, each by a screw 418. A second unit 411m, which is a special second unit (referred to also as 'multi-base adapter'), may then be connected (e.g., in substitution of healing caps, after a healing period as described above regarding previously explained embodiments) to the proximal end of each base unit, e.g., by an integral interconnecting unit 411t having external thread mating with internal thread of the base unit.

Each special second unit 411m has inside a proximal portion thereof 411p, a peripheral indentation 411r contoured and dimensioned to capture the split ball head 432b of the tolerated connective unit 432, which emerges out of the distal end of each split nut 434 to enter the special second unit 411 through its proximal opening 411s. The split ball head 432b can be easily pushed into the proximal opening 411b of a respective special second unit 411m, when the screw 433 is in retracted linear position, i.e., when the screw 433 is at least partially released, and the split ball is in a contracted state, or at least in a semi contracted state.

Once the split ball is accommodated within the inner peripheral recess in the proximal portion of special second unit 411m, and the respective threaded cap 431 is released, its orientation can be changed freely within the boundaries of its virtual-cone VC. Once all the plurality of holes of the milled bar 401 to be retained are prepared each with its respective tolerated connective member 432 in place yet before secured, the dentist can decide on a most preferred position of the milled bar 401 within the tolerance given by the plurality of tolerated connective member 432, and then secure the screw 433 of each, for thereby expand the respective split ball head 432b to the maximum allowed, thus creating a seizing pressure between the split ball head 432b and the internal peripheral indentation 411r, thereby locking each tolerated connective member 432 in its present orientation, making it immovably secured to the special second unit 411m, and hence immovably tethered to the respective dental implant.

The milled bar 401 can then be secured to the tolerated connective member 432 by fully securing each of the threaded caps 431 to its split nut 434, thereby immovably seizing each ball head 432a within the respective split nut 434.

The milled bar thus becomes immovably tethered to the plurality of implants, with the inner rims 401a captured each in between the distal edge of the respective threaded cap and the shoulder 434a of the respective split nut.

The milled bar can then be removed whenever required, simply by removing the threaded caps 431, and return when desired, exactly to its original position, simply by placing it back on the ball heads 432a and resecuring the threaded caps.

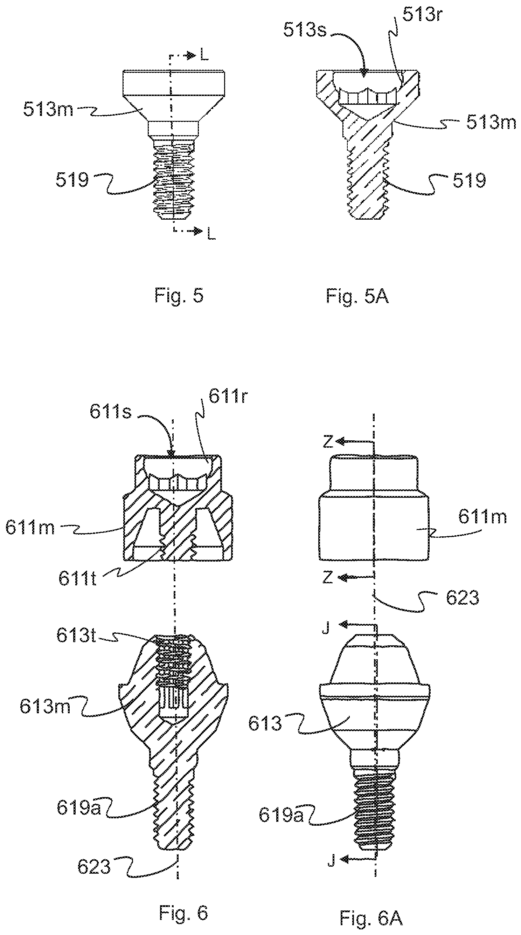

Referring now to Figures 5 and 5A, a special first unit (referred to also as 'short adapter') 513m, for tethering the tolerated connective member 432 directly to an implant without intermediation of the special second unit 411m, is disclosed. The special first unit comprises a peripheral indentation 513r at its proximal portion, corresponding to the peripheral indentation 411r in the special second unit 411m, and an integral screw 519 for connecting the unit 513m directly to the intended implant. The unit is especially useful in cases where a gap between the bar 401 and an implant, does not allow the use of a base unit such as 413x and 413y in combination with the special second unit 411m.

Referring now to Figures 6 and 6A, an embodiment comprising a hybrid first unit (referred to also as 'multi-unit adapter') 613m, is disclosed. This embodiment does not form part of the claimed subject-matter. The hybrid first unit 613m has an integral screw 619m for directly connecting to an intended implant, like the special first unit of the embodiment of Figure 5, yet differs from said embodiment in that the peripheral recess 611m for seizing the split ball head 432b is formed in the proximal end of a special second unit 611m, which corresponds to the special second unit 411m of the embodiment of Figure 4. The special second unit 611m comprises an opening 611s at its proximal end, for receiving the split ball head, and an outer thread 611t directed towards its distal end, mating with an inner thread 613t located at the proximal end of the hybrid first unit 613m.

The corresponding structures, materials, acts, and equivalents of all means or step plus function elements in the claims below are intended to include any structure, material, or act for performing the function in combination with other claimed elements as specifically claimed. The embodiment was chosen and described in order to best explain the principles of the invention and the practical application, and to enable others of ordinary skill in the art to understand the invention for various embodiments with various modifications as are suited to the particular use contemplated within the limits of the appended claimed subject matter.

## Claims

1. A dental abutment (100), comprising: first and second units (113, 111) that are connectible together by connective means, a connective element (117), and an intermediation tool (119), wherein the first unit (113) is removably connectible to an unclaimed in vivo dental implant by rotating the connective element (117), wherein the connective element (117) is a screw, said first unit (113) having a distal end and a proximal end, the distal end is remoter from an approach of a dentist relative to the proximal end, said proximal end comprises a supportive surface (113b) adapted to lie in contact with a contact surface located on a distal end of the second unit (111), wherein a longitudinal axis (123a) of the second unit (111) is perpendicular to a plane tangential to the distal end of the second unit (111), wherein said longitudinal axis (123a) of the second unit (111) forms a predetermined angle with respect to a longitudinal axis (123) of the first unit (113), the predetermined angle determining an inclination of the second unit (111) about the longitudinal axis (123), wherein the connective means are other than the connective element (117) and comprise at least one of: welding, soldering, gluing, or sticking, wherein the second unit (111) is adapted to be permanently connected to the first unit (113) by the connective means, wherein permanently connected surfaces of the first and second units (113, 111) constitute together an infrastructural support for a construction of a dental prosthesis,
wherein after the first and second units (113, 111) are permanently connected, the connective element (117) is indirectly accessible to the dentist through an upper opening (111s) of the second unit (111), wherein the connective element (117) is indirectly accessible via the intermediation tool (119), the intermediation tool (119) having a distal end (119G) adapted to be geared to a head (117a) of the connective element (117) and a proximal end (119s) with a recess adapted to be manipulated by a screwdriver, wherein the connective element (117) has a teethed head portion, and the distal end (119G) of the intermediation tool (119) is a teethed distal end, wherein the teethed distal end is adapted to be geared to the teethed head portion, the intermediation tool (119) enabling the dentist to manipulate the connective element (117) through the intermediation tool (119), whereby the dentist is enabled to connect and disconnect the dental abutment (100) to and from the dental implant via the intermediation tool (119),
wherein a bore (113a) for the connective element (117) within the first unit (113) shares the longitudinal axis (123) with the dental implant, and the intermediation tool (119) is in alignment with the longitudinal axis (123a) of the second unit (111).

2. The dental abutment according to claim 1, further comprising mutual rotation preventive preparation structure configured to allow the dentist to disable in vivo pivoting of the second unit (111) with respect to the first unit (113), wherein the mutual rotation preventive preparation structure comprises matching rotational symmetry breaking male-female contours, wherein at least one rotational symmetry breaking male contour is formed in one of the first and the second units (113, 111), wherein at least one rotational symmetry breaking female contour in match with the at least one rotational symmetry breaking male contour is formed in another of the first and the second units (113, 111).

3. The dental abutment according to claim 1, further comprising mutual rotation preventive preparation structure configured to allow the dentist to disable in vivo pivoting of the second unit (111) with respect to the first unit (113), wherein the mutual rotation preventive preparation structure comprises outwardly facing wall surface (113u) extending from a mid-portion (113q) of the first unit (113) towards the proximal end of the first unit (113) and facing away from the longitudinal axis (123) of the first unit (113), whereby allowing the dental prosthesis to be integrated in a first portion thereof with the outwardly facing wall surface (113u) and in a second portion thereof with an outwardly facing wall surface of the second unit (111).

4. The dental abutment according to claim 1, wherein the supportive surface (113b) is on a plane tilted with respect to a longitudinal axis (123) of the first unit (113), by a degree of tilting between 11 and 30 degrees, the degree of tilting corresponding to the predetermined angle, wherein outer walls of the second unit (111) are configured to extend without intersecting the longitudinal axis (123) of the first unit (113), wherein the bore (113a) for the connective element (117) comprises a screw channel in the first unit (113), wherein after the first and second units (113, 111) are permanently connected, the second unit (111) prevents a direct removal of the screw due to the degree of tilting between the second unit (111) and the first unit (113).

5. The dental abutment according to claim 1, wherein the second unit (111) comprises a hollow sleeve extending between the upper opening (111s) at a proximal end of the second unit (111) and between the head (117a) of the connective element (117), the head (117a) comprising a proximal end of the connective element (117), whereby providing the dentist with an access to the head (117a) of the connective element (117) for connecting or disconnecting between the dental abutment (100) and the dental implant by manipulating the connective element (117) via the intermediation tool (119).

6. The dental abutment according to claim 5, wherein the intermediation tool (119) is dimensioned to be concealed within the hollow sleeve of the second unit (111), wherein a proximal end of the intermediation tool (119) is adapted to be driven by the screwdriver, whereby a rotation of the screwdriver about the longitudinal axis (123a) of the second unit (111) is transmitted by a mutual gearing between the distal end (119G) of the intermediation tool (119) and the head (117a) of the connective element (117) into a rotation of the connective element (117) about the longitudinal axis (123) of the first unit (113).

## Patentansprüche

1. Dentales Abutment (100), umfassend: eine erste und eine zweite Einheit (113, 111), die durch Verbindungsmittel miteinander verbindbar sind, ein Verbindungselement (117) und ein Zwischenwerkzeug (119), wobei die erste Einheit (113) durch Drehen des Verbindungselements (117) entfernbar mit einem nicht beanspruchten In-vivo-Dentalimplantat verbindbar ist, wobei das Verbindungselement (117) eine Schraube ist, wobei die erste Einheit (113) ein distales Ende und ein proximales Ende aufweist, wobei das distale Ende von einem Zugang eines Zahnarztes relativ zu dem proximalen Ende weiter entfernt ist, wobei das proximale Ende eine Stützfläche (113b) umfasst, die ausgelegt ist, dass sie mit einer Kontaktfläche in Kontakt steht, die sich an einem distalen Ende der zweiten Einheit (111) befindet, wobei eine Längsachse (123a) der zweiten Einheit (111) senkrecht zu einer Ebene verläuft, die tangential zu dem distalen Ende der zweiten Einheit (111) liegt, wobei die Längsachse (123a) der zweiten Einheit (111) einen vorbestimmten Winkel in Bezug auf eine Längsachse (123) der ersten Einheit (113) bildet, wobei der vorbestimmte Winkel eine Neigung der zweiten Einheit (111) um die Längsachse (123) bestimmt, wobei die Verbindungsmittel von dem Verbindungselement (117) verschieden sind und mindestens eines von Folgendem umfassen: Schweißen, Löten, Kleben oder Ankleben, wobei die zweite Einheit (111) ausgelegt ist, dass sie durch die Verbindungsmittel dauerhaft mit der ersten Einheit (113) verbunden ist, wobei dauerhaft verbundene Oberflächen der ersten und der zweiten Einheit (113, 111) zusammen einen infrastrukturellen Träger für einen Aufbau einer Dentalprothese bilden,
wobei nach dem dauerhaften Verbinden der ersten und der zweiten Einheit (113, 111) das Verbindungselement (117) dem Zahnarzt durch eine obere Öffnung (111s) der zweiten Einheit (111) indirekt zugänglich ist, wobei das Verbindungselement (117) über das Zwischenwerkzeug (119) indirekt zugänglich ist, wobei das Zwischenwerkzeug (119) ein distales Ende (119G), das ausgelegt ist, mit einem Kopf (117a) des Verbindungselements (117) in Eingriff zu stehen, und ein proximales Ende (119s) mit einer Ausnehmung aufweist, das ausgelegt ist, mit einem Schraubendreher manipulierbar zu sein, wobei das Verbindungselement (117) einen gezahnten Kopfabschnitt aufweist, und das distale Ende (119G) des Zwischenwerkzeugs (119) ein gezahntes distales Ende ist, wobei das gezahnte distale Ende ausgelegt ist, mit dem gezahnten Kopfabschnitt in Eingriff zu stehen, wobei das Zwischenwerkzeug (119) dem Zahnarzt ermöglicht, das Verbindungselement (117) über das Zwischenwerkzeug (119) zu manipulieren, wodurch dem Zahnarzt ermöglicht wird, das dentale Abutment (100) über das Zwischenwerkzeug (119) mit dem Dentalimplantat zu verbinden und davon zu trennen,
wobei eine Bohrung (113a) für das Verbindungselement (117) innerhalb der ersten Einheit (113) die Längsachse (123) mit dem Dentalimplantat gemeinsam hat und das Zwischenwerkzeug (119) mit der Längsachse (123a) der zweiten Einheit (111) fluchtend ausgerichtet ist.

2. Dentales Abutment gemäß Anspruch 1, ferner umfassend eine Vorbereitungsstruktur zur Verhinderung gegenseitiger Rotation, die so konfiguriert ist, dass sie dem Zahnarzt ermöglicht, ein In-vivo-Schwenken der zweiten Einheit (111) in Bezug auf die erste Einheit (113) zu deaktivieren, wobei die Vorbereitungsstruktur zur Verhinderung gegenseitiger Rotation passende Rotationssymmetrie brechende Stecker-Buchse-Konturen umfasst, wobei mindestens eine Rotationssymmetrie brechende Steckerkontur in einer der ersten und der zweiten Einheit (113, 111) ausgebildet ist, wobei mindestens eine Rotationssymmetrie brechende Buchsenkontur in Übereinstimmung mit der mindestens einen Rotationssymmetrie brechenden Steckerkontur in einer anderen der ersten und der zweiten Einheit (113, 111) ausgebildet ist.

3. Dentales Abutment gemäß Anspruch 1, ferner umfassend eine Vorbereitungsstruktur zur Verhinderung gegenseitiger Rotation, die konfiguriert ist, dass sie dem Zahnarzt ermöglicht, ein In-vivo-Schwenken der zweiten Einheit (111) in Bezug auf die erste Einheit (113) zu deaktivieren, wobei die Vorbereitungsstruktur zur Verhinderung gegenseitiger Rotation eine nach außen weisende Wandfläche (113u) umfasst, die sich von einem Mittelabschnitt (113q) der ersten Einheit (113) in Richtung des proximalen Endes der ersten Einheit (113) erstreckt und von der Längsachse (123) der ersten Einheit (113) weg weist, wodurch ermöglicht wird, dass die Dentalprothese in einem ersten Abschnitt davon mit der nach außen weisenden Wandfläche (113u) und in einem zweiten Abschnitt davon mit einer nach außen weisenden Wandfläche der zweiten Einheit (111) integriert wird.

4. Dentales Abutment gemäß Anspruch 1, wobei die Stützfläche (113b) auf einer Ebene liegt, die in Bezug auf eine Längsachse (123) der ersten Einheit (113) um einen Neigungsgrad zwischen 11 und 30 Grad geneigt ist, wobei der Neigungsgrad dem vorbestimmten Winkel entspricht, wobei Außenwände der zweiten Einheit (111) so konfiguriert sind, dass sie sich erstrecken, ohne die Längsachse (123) der ersten Einheit (113) zu schneiden, wobei die Bohrung (113a) für das Verbindungselement (117) einen Schraubenkanal in der ersten Einheit (113) umfasst, wobei, nachdem die erste und die zweite Einheit (113, 111) dauerhaft verbunden sind, die zweite Einheit (111) ein direktes Entfernen der Schraube aufgrund des Neigungsgrads zwischen der zweiten Einheit (111) und der ersten Einheit (113) verhindert.

5. Dentales Abutment gemäß Anspruch 1, wobei die zweite Einheit (111) eine hohle Hülse umfasst, die sich zwischen der oberen Öffnung (111s) an einem proximalen Ende der zweiten Einheit (111) und zwischen dem Kopf (117a) des Verbindungselements (117) erstreckt, wobei der Kopf (117a) ein proximales Ende des Verbindungselements (117) umfasst, wodurch dem Zahnarzt ein Zugang zu dem Kopf (117a) des Verbindungselements (117) zum Verbinden oder Trennen zwischen dem dentalen Abutment (100) und dem Dentalimplantat durch Manipulieren des Verbindungselements (117) über das Zwischenwerkzeug (119) bereitgestellt wird.

6. Dentales Abutment gemäß Anspruch 5, wobei das Zwischenwerkzeug (119) dimensioniert ist, um innerhalb der hohlen Hülse der zweiten Einheit (111) verborgen zu sein, wobei ein proximales Ende des Zwischenwerkzeugs (119) ausgelegt ist, um durch den Schraubendreher angetrieben zu werden, wodurch eine Rotation des Schraubendrehers um die Längsachse (123a) der zweiten Einheit (111) durch eine gegenseitige Verzahnung zwischen dem distalen Ende (119G) des Zwischenwerkzeugs (119) und dem Kopf (117a) des Verbindungselements (117) in eine Rotation des Verbindungselements (117) um die Längsachse (123) der ersten Einheit (113) übertragen wird.

## Revendications

1. Butée dentaire (100), comprenant : des première et seconde unités (113, 111) qui peuvent être raccordées ensemble par un moyen de raccordement, un élément de raccordement (117) et un outil d'intermédiation (119), ladite première unité (113) pouvant être raccordée de manière amovible à un implant dentaire in vivo non revendiqué par rotation de l'élément de raccordement (117), ledit élément de raccordement (117) étant une vis, ladite première unité (113) possédant une extrémité distale et une extrémité proximale, ladite extrémité distale étant plus éloignée d'une approche d'un dentiste par rapport à l'extrémité proximale, ladite extrémité proximale comprenant une surface de support (113b) adaptée à être en contact avec une surface de contact située sur une extrémité distale de la seconde unité (111), un axe longitudinal (123a) de la seconde unité (111) étant perpendiculaire à un plan tangentiel à l'extrémité distale de la seconde unité (111), ledit axe longitudinal (123a) de la seconde unité (111) formant un angle prédéfini par rapport à un axe longitudinal (123) de la première unité (113), l'angle prédéfini déterminant l'inclinaison de la seconde unité (111) autour de l'axe longitudinal (123), ledit moyen de raccordement étant autre que l'élément de raccordement (117) et comprenant au moins l'une des opérations suivantes : soudage, brasage, collage ou adhérence, ladite seconde unité (111) étant adaptée à être raccordée en permanence à la première unité (113) par le moyen de raccordement, lesdites surfaces raccordées en permanence des première et seconde unités (113, 111) constituant ensemble un support infrastructurel pour une construction d'une prothèse dentaire,
après que les première et seconde unités (113, 111) soient raccordées en permanence, ledit élément de raccordement (117) étant indirectement accessible au dentiste par une ouverture supérieure (111s) de la seconde unité (111), ledit élément de raccordement (117) étant indirectement accessible par l'intermédiaire de l'outil d'intermédiation (119), ledit outil d'intermédiation (119) possédant une extrémité distale (119G) adaptée à être engrenée sur une tête (117a) de l'élément de raccordement (117) et une extrémité proximale (119s) avec un évidement adapté à être manipulé par un tournevis, ledit élément de raccordement (117) possédant une partie de tête dentée, et ladite extrémité distale (119G) de l'outil d'intermédiation (119) étant une extrémité distale dentée, ladite extrémité distale dentée étant adaptée à être engrenée sur la partie de tête dentée, ledit outil d'intermédiation (119) permettant au dentiste de manipuler l'élément de raccordement (117) au moyen de l'outil d'intermédiation (119), grâce à quoi le dentiste est autorisé à raccorder à et à détacher la butée dentaire (100) de l'implant dentaire par l'intermédiaire de l'outil d'intermédiation (119),
un alésage (113a) pour l'élément de raccordement (117) à l'intérieur de la première unité (113) partageant l'axe longitudinal (123) avec l'implant dentaire, et ledit outil d'intermédiation (119) étant aligné avec l'axe longitudinal (123a) de la seconde unité (111).

2. Butée dentaire selon la revendication 1, comprenant en outre une structure de préparation de prévention de rotation mutuelle conçue pour permettre au dentiste de désactiver le pivotement in vivo de la seconde unité (111) par rapport à la première unité (113), ladite structure de préparation de prévention de rotation mutuelle comprenant des contours mâle-femelle de rupture de symétrie de rotation correspondants, au moins un contour mâle de rupture de symétrie de rotation étant formé dans l'une de la première et de la seconde unité (113, 111), au moins un contour femelle de rupture de symétrie de rotation en correspondance avec ledit au moins un contour mâle de rupture de symétrie de rotation étant formé dans l'autre de la première et de la seconde unité (113, 111).

3. Butée dentaire selon la revendication 1, comprenant en outre une structure de préparation préventive de rotation mutuelle conçue pour permettre au dentiste de désactiver le pivotement in vivo de la seconde unité (111) par rapport à la première unité (113), ladite structure de préparation préventive de rotation mutuelle comprenant une surface de paroi orientée vers l'extérieur (113u) s'étendant depuis une partie médiane (113q) de la première unité (113) vers l'extrémité proximale de la première unité (113) et orientée à l'opposé de l'axe longitudinal (123) de la première unité (113), permettant ainsi à la prothèse dentaire d'être intégrée dans une première partie de celle-ci avec la surface de paroi orientée vers l'extérieur (113u) et dans une seconde partie de celle-ci avec une surface de paroi orientée vers l'extérieur de la seconde unité (111).

4. Butée dentaire selon la revendication 1, ladite surface de support (113b) se trouvant sur un plan incliné par rapport à un axe longitudinal (123) de la première unité (113), d'un degré d'inclinaison compris entre 11 et 30 degrés, ledit degré d'inclinaison correspondant à l'angle prédéterminé, lesdites parois extérieures de la seconde unité (111) étant conçues pour s'étendre sans croiser l'axe longitudinal (123) de la première unité (113), ledit alésage (113a) pour l'élément de raccordement (117) comprenant un canal de vis dans la première unité (113), après que les première et seconde unités (113, 111) soient raccordées de manière permanente, ladite seconde unité (111) empêchant le retrait direct de la vis en raison du degré d'inclinaison entre la seconde unité (111) et la première unité (113).

5. Butée dentaire selon la revendication 1, ladite seconde unité (111) comprenant un manchon creux s'étendant entre l'ouverture supérieure (111s) au niveau d'une extrémité proximale de la seconde unité (111) et entre la tête (117a) de l'élément de raccordement (117), ladite tête (117a) comprenant une extrémité proximale de l'élément de raccordement (117), fournissant ainsi au dentiste un accès à la tête (117a) de l'élément de raccordement (117) pour raccorder ou détacher entre la butée dentaire (100) et l'implant dentaire en manipulant l'élément de raccordement (117) par l'intermédiaire de l'outil d'intermédiation (119).

6. Butée dentaire selon la revendication 5, ledit outil d'intermédiation (119) étant dimensionné de manière à être dissimulé à l'intérieur du manchon creux de la seconde unité (111), une extrémité proximale de l'outil d'intermédiation (119) étant adaptée à être entraînée par le tournevis, une rotation du tournevis autour de l'axe longitudinal (123a) de la seconde unité (111) étant transmise par un engrenage mutuel entre l'extrémité distale (119G) de l'outil d'intermédiation (119) et la tête (117a) de l'élément de raccordement (117) en une rotation de l'élément de raccordement (117) autour de l'axe longitudinal (123) de la première unité (113).
